# EUROPEAN PATENT APPLICATION

(11) **EP 3 219 421 A1**
(43) Date of publication of application: **20.09.2017**
(21) Application number: 16188049.7
(22) Date of filing: 09.09.2016
(51) Int. Cl.: B23B 29/12, B23B 27/10

(54) **TOOLHOLDERS WITH FLUID SUPPLY CONDUITS FOR SUPERCRITICAL CO2**

(71) Applicant: Seco Tools AB, 737 82 Fagersta (SE)
(72) Inventor: JONSSON, Mats, SE 776 92 Hedemora (SE); THELIN, Jimmy, 737 91 Fagersta (SE)
(74) Representative: Klöfver, Jörgen

(57) **Abstract**

A toolholder (21) includes a toolholder body (23), the toolholder body being adapted to present a cutting edge (25) at a fixed point (F), a fluid supply conduit (29) having a first end (31) adapted to be connected to a source (S) of fluid and a second end (33) having an outlet opening (35) facing generally toward the fixed point. The outlet opening (35) is between 0.1 mm and less than 0.5 mm in diameter, more preferably between 0.1 mm and 0.2 mm, and still more preferably between 0.15 mm and 0.2 mm.

## Description

### BACKGROUND AND SUMMARY

The present invention relates generally to machining tool toolholders having fluid supply conduits and, more particularly, to such toolholders having fluid supply conduits particularly adapted for use with supercritical CO₂ (sCO2).

In machining operations it is known that extremely high temperatures can be generated where a cutting edge contacts a metal workpiece. In the past, it has been sufficient to direct conventional coolant/lubricant materials such as oil to the vicinity of the cutting edge. This has typically been accomplished by pumping coolant through conduits formed in the toolholders or attached to the toolholders and spraying it onto the cutting edge. With higher cutting speeds and harder materials, conventional coolants have been found to be insufficient to cool the cutting edge, resulting in frequent breakage. Further, many coolants and lubricants present significant toxicity and environmental concerns.

The utility of supercritical carbon dioxide as a coolant/lubricant in machining operations is discussed in U.S. Patent Nos. 7,414,015 and 8,167,092. As explained at, e.g., https://en.wikipedia.org/wiki/Supercritical carbon dioxide, sCO2 is a fluid state of carbon dioxide where it is held at or above its critical temperature and critical pressure. Carbon dioxide usually behaves as a gas in air at standard temperature and pressure (STP), or as a solid called dry ice when frozen. If the temperature and pressure are both increased from STP to be at or above the critical point for carbon dioxide, it can adopt properties midway between a gas and a liquid. More specifically, it behaves as a supercritical fluid above its critical temperature (304.25 K, 31.10 °C, 87.98 °F) and critical pressure (72.9 atm, 7.39 MPa, 1,071 psi), expanding to fill its container like a gas but with a density like that of a liquid. Supercritical CO₂ is becoming an important commercial and industrial solvent due to its role in chemical extraction in addition to its low toxicity and environmental impact.

The inventors have recognized that problems with the use of sCO2 as a coolant in machining operations is that, when used with conventional machining tools, it is difficult to maintain sufficiently high pressures to keep the CO₂ in liquid form in the fluid conduits until it is sprayed toward a worksite. When the CO₂ expands too soon, it forms ice that can clog the fluid conduits before the CO₂ can be sprayed toward the worksite. Even if high pressure pumps could be provided to keep the sCO2 in liquid form until after it is sprayed out of the fluid conduits, the size of the outlets of the fluid conduits is greater than is necessary and leads to waste of coolant. Conventional fluid conduits have diameters typically in the range of 1.5 mm to 2 mm or larger, and it is difficult to form conduits in toolholders that are significantly smaller than that.

It is desirable to provide a toolholder for machining operations that is adapted for use with sCO2 as a coolant. It is further desirable to provide a toolholder for machining operations that minimizes waste of sCO2. It is further desirable to provide a toolholder for machining operations toolholder that permits use of sCO2 as a coolant while minimizing the requirements for pumping to maintain the sCO2 in liquid form while in the fluid conduit. In accordance with an aspect of the present invention, a toolholder comprises a toolholder body, the toolholder body being adapted to present a cutting edge at a fixed point, a fluid supply conduit having a first end adapted to be connected to a source of fluid and a second end having an outlet opening facing generally toward the fixed point. The outlet opening is between 0.1 mm and less than 0.5 mm in diameter, more preferably between 0.1 mm and 0.2 mm, and still more preferably between 0.15 mm and 0.2 mm.

The toolholder according to the present invention facilitates use of sCO2 as a coolant by providing an outlet opening is between 0.1 mm and less than 0.5 mm in diameter. By providing an outlet opening of such a small size, a smaller pump can be used to maintain the sCO2 in liquid form in the fluid supply conduit, thereby reducing cost of equipment. Moreover, the use of the outlet opening between 0.1 mm and less than 0.5 mm in diameter facilitates maintaining the sCO2 in liquid form until after it expands out of the outlet opening so that ice formation in the fluid supply conduit can be avoided. Further, use of an outlet opening between 0.1 mm and less than 0.5 mm in diameter facilitates precisely directing the sCO2 spray toward a worksite, thereby minimizing waste of sCO2.

### BRIEF DESCRIPTION OF THE DRAWINGS

The features and advantages of the present invention are well understood by reading the following detailed description in conjunction with the drawings in which like numerals indicate similar elements and in which:
FIGS. 1A, 1B, and 1C are perspective, side, and perspective, partially transparent views of a toolholder according to a first embodiment of the present invention;
FIG. 2A is a perspective view of a toolholder according to a second embodiment of the present invention, and FIGS. 2B, 2C, and 2D are perspective, side, and top partially transparent views of a clamping arm of the toolholder of FIG. 2A according to another aspect of the present invention;
FIG. 3A is a perspective view of a toolholder according to a third embodiment of the present invention, and FIGS. 3B and 3C are side and top partially transparent views of a clamping arm of the toolholder of FIG. 3A according to another aspect of the present invention;
FIG. 4A is a perspective top left view and FIG. 4B is a perspective top right, partially exploded view of a toolholder according to a fourth embodiment of the present invention, and
FIG. 4C is a perspective top right, partially exploded, partially transparent view of the toolholder according to FIGS. 4A and 4B;
FIGS. 5A, 5B, and 5C are side, front, and side, cross-sectional views of a nozzle according to an aspect of the present invention; and
FIG. 6 is a side, cross-sectional view of a nozzle according to another aspect of the present invention.

### DETAILED DESCRIPTION

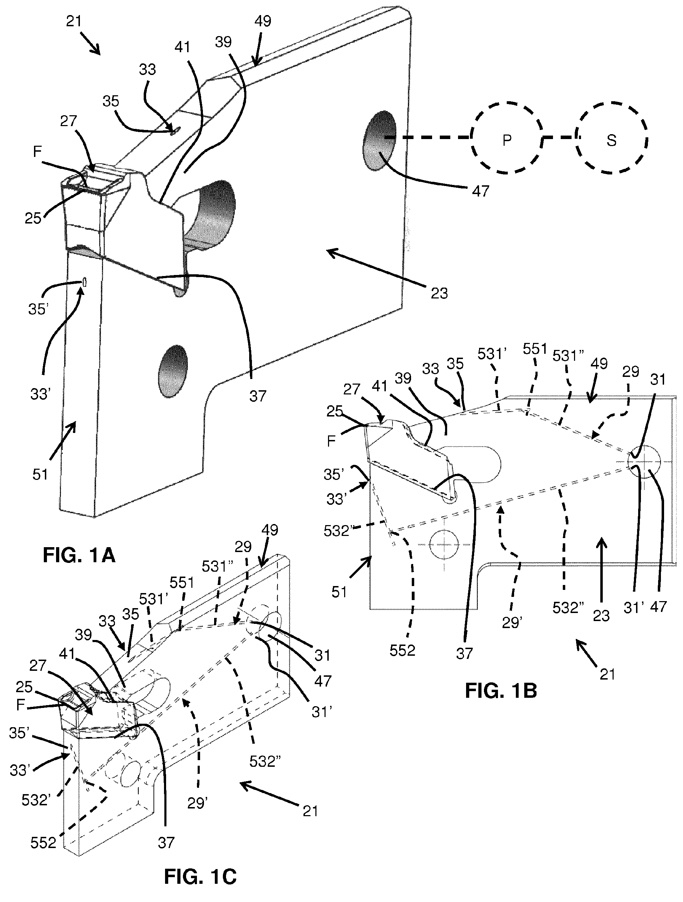

Embodiments of toolholders 21, 121, 221, and 321 according to aspects of the present invention are shown in whole or in part in FIGS. 1A-1C, 2A-2D, 3A-3C, and 4A-4C. For purposes of discussion, the toolholder will be described in connection with the toolholder 21, which discussion will be understood to apply to all embodiments of the toolholders except where otherwise indicated. The illustrated toolholders are of generally known configurations that have been adapted according to the present invention for use with sCO2 coolant. The illustrated toolholders are toolholders for turning tools, however, it will be appreciated that the invention has applications in rotating and other machining tools, as well.

As seen in FIGS. 1A-1C, the toolholder 21 includes a toolholder body 23. The toolholder body 23 is adapted to present a cutting edge 25 at a fixed point or area (hereinafter referred to generically as a fixed point) F. Typically, a cutting insert 27 having one or more cutting edges 25 is mounted to the toolholder body 23 so that a cutting edge is disposed at the fixed point F, however, a cutting edge may alternatively be permanently attached to the toolholder body. The reference to a fixed point F means that part of the cutting edge 25, which is typically in the form of a line rather than a point, will be disposed close to the point, typically as close as possible given tolerances of components such as the cutting insert, the toolholder, and structures for mounting the cutting insert to the toolholder.

The toolholder 21 includes a fluid supply conduit 29 as seen in FIGS. 1B and 1C. The fluid supply conduit 29 has a first end 31 adapted to be connected to a source S (FIG. 1B) of fluid and a second end 33 having an outlet opening 35 facing generally toward the fixed point F. The outlet opening 35 is preferably between 0.1 mm and less than 0.5 mm in diameter, still more preferably between 0.1 mm and 0.2 mm, and still more preferably between 0.15 mm and 0.2 mm. Other portions of the fluid supply conduit 29 can be significantly larger than the outlet opening 35 and may have dimensions typical for coolant channels designed for use with conventional coolants, such as diameters of 1.5 mm to 2 mm or larger. Using small outlet openings 35 facilitates use of sCO2 as a coolant with pressure in the outlet openings at about 73 bars and temperatures of about 20 °C without the sCO2 turning to ice. If larger outlet openings are used, higher pressures and/or lower temperatures would need to be maintained to keep the sCO2 from turning to ice and clogging the outlet openings. A pump P (FIG. 1B) is ordinarily provided to keep the sCO2 at an appropriate pressure level in the fluid conduit 29 and the outlet opening 35 to avoid clogging of the outlet opening.

The toolholder 21 ordinarily includes a cutting insert seat 37 when a cutting insert 27 comprises the cutting edge 25. The cutting insert 27 is mountable in the cutting insert seat 37 to permit the toolholder to present the cutting edge 25 at the fixed point F. Typically, the cutting insert 27 is precisely mounted in the cutting insert seat 37 so that the cutting edge 25 is in a predetermined location and orientation relative to the toolholder body 23. The cutting insert seat 37 typically includes a bottom abutment surface and two side abutment surfaces against which corresponding supporting surfaces of the cutting insert 27 abut to support the insert relative to the toolholder body 23.

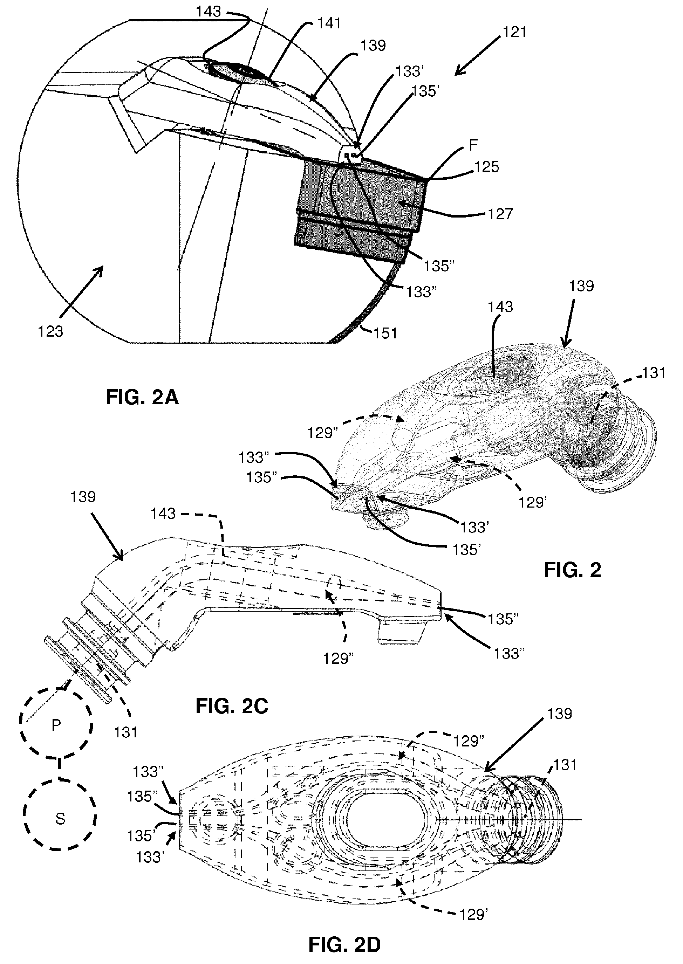

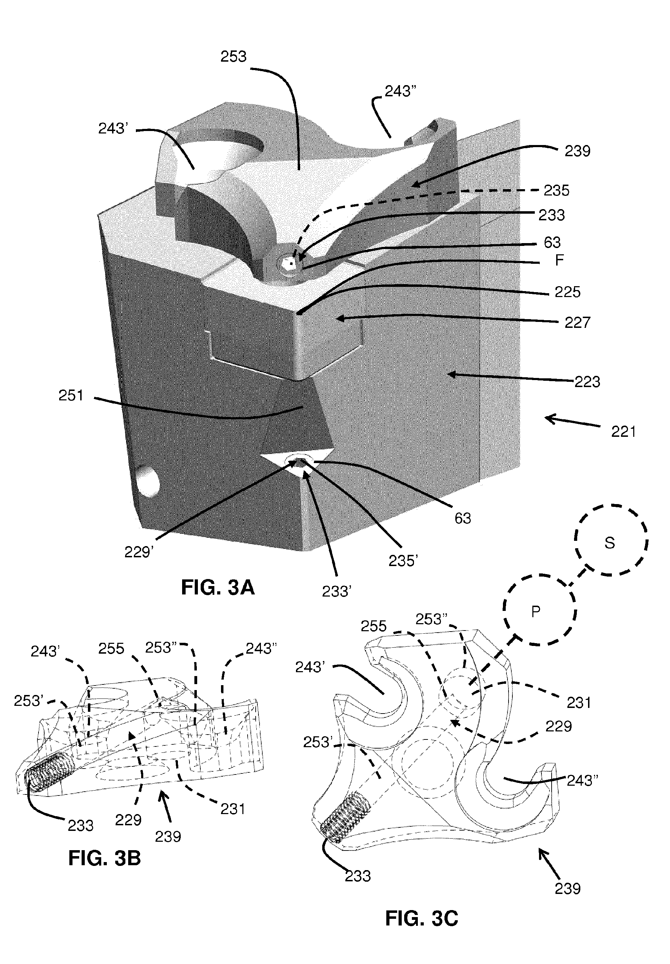

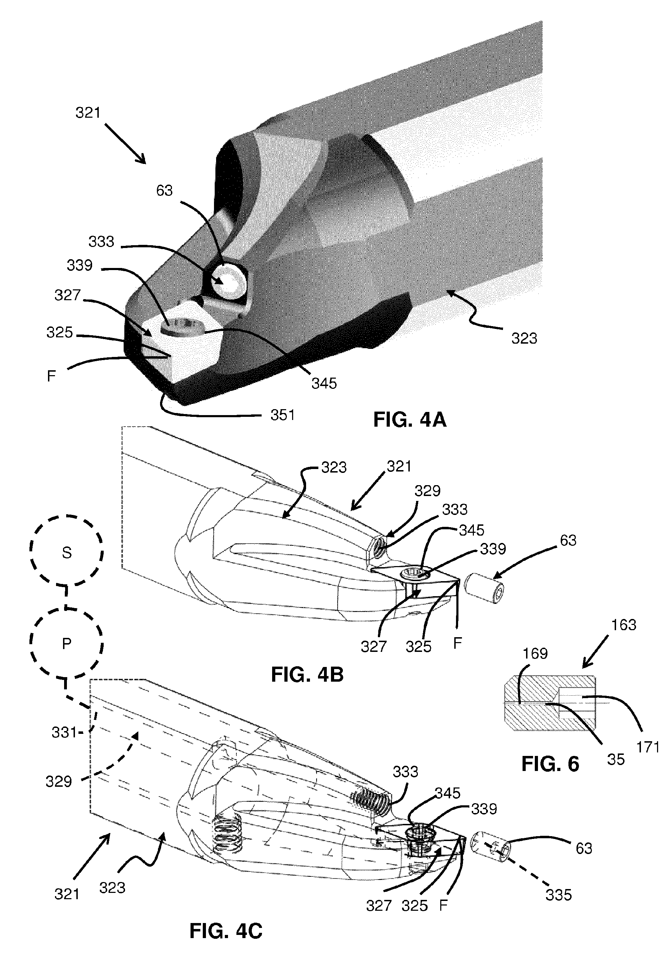

The cutting insert 27 is typically secured to the toolholder body 23 by a clamp that can be considered to be an element of the toolholder. In the embodiment of FIGS. 1A-1C, the clamp is in the form of an arm 39 that is integral with the toolholder body 23 and that contacts a top surface 41 of the cutting insert. In the embodiments of the toolholder 121 and 221 shown in FIGS. 2A and 3A, respectively, the clamp is in the form of a clamping arm 139 and 239 that is bolted to the toolholder body 123 and 223 by bolts 141 (FIG. 2A) (not shown for FIG. 3A) extending through holes 143 and 243' and 243" in the clamping arms and into openings (typically threaded) (not shown) in the toolholder bodies to clamp the cutting inserts 127 and 227 in place. A forward portion of the clamping arm 39, 139, and 239 contacts a top side of the cutting insert 27 and holds the insert supporting surfaces of the insert against the abutment surfaces of the cutting insert seat 37. In the embodiment of the toolholder 321 shown in FIG. 4A-4C, the clamp is in the form of a clamping bolt or screw 339 that extends through a hole 345 in the cutting insert 327 and mates with a hole (typically threaded) (not shown) in the toolholder body 323 and holds the insert supporting surfaces of the insert against the abutment surfaces of the cutting insert seat.

In the embodiments of the toolholder shown in FIGS. 1A-1C, 2A-2D, and 3A-3C, the fluid supply conduit 29 is at least partially inside the clamping arm 39, 139, and 239.

In the embodiment shown in FIGS. 1A-1C, the toolholder body 23 has a lateral opening 47 that is connected to the source S of fluid via conduits outside of the toolholder body. A first fluid supply conduit 29 extends from a top side 49 of the toolholder body 23 in the clamping arm 39 to the lateral opening 47. A second fluid supply conduit 29' extends from a front side 51 of the toolholder body 23 below the cutting insert seat 37 to the lateral opening 47.

The first fluid supply conduit 29 can be formed by any suitable means, such as by drilling a straight hole 531' in the toolholder body 23 from the second end 33 of the fluid supply conduit at the top side 49 of the toolholder body to a point 551 inside the toolholder body and drilling another straight hole 531" from another point on the top side of the toolholder body to a first end 31 the lateral opening 47. The straight hole 531' can be angled so that an extension of the straight hole intersects with or is proximate the fixed point F. The straight hole 531" intersects with the straight hole 531' at the point 551 inside the toolholder body 23. The portion of the straight hole 531" between the point 551 and the top side 49 of the toolholder body 23 can be plugged by any suitable means. An outlet opening 35 can be disposed inside the clamping arm 39 at the second end 33 of the fluid supply conduit 29. The outlet opening 35 generally faces the fixed point F and the front side 51 of the toolholder body 23.

The second fluid supply conduit 29' can be formed by any suitable means, such as by drilling a straight hole 532' in the toolholder body 23 from the second end 33' of the fluid supply conduit at the front side 51 of the toolholder body to a point 55 inside the toolholder body and drilling another straight hole 532" from another point on the front side of the toolholder body to a first end 33' at the lateral opening 47. The straight hole 532' can be angled so that an extension of the straight hole intersects with or is proximate the fixed point F. The straight hole 532" intersects with the straight hole 532' at the point 552 inside the toolholder body 23. The portion of the straight hole 532" between the point 552 and the front side 51 of the toolholder body 23 can be plugged by any suitable means. An outlet opening 35' can be disposed in the toolholder body 23 at the second end 33' of the second fluid supply conduit 29'. The outlet opening 35' generally faces the fixed point F and the top side 53 of the toolholder body 23.

In the embodiment of the toolholder 121 shown in FIG. 2A, the clamping arm 139 (shown by itself in FIGS. 2B-2D) is secured to the toolholder body 123 by a bolt 141 that extends through a through hole 143 in the clamping arm and mates with an internally threaded hole (not shown) or other suitable structure in the toolholder body in a known manner. One or more fluid supply conduits extend through the clamping arm 139. As seen in FIGS. 2B-2D, a pair of fluid supply conduits 129' and 129" extend from a single first end 131 that, as shown in FIG. 2C, is adapted to be connected to the pump P and source S of fluid to separate second ends 133' and 133" facing the fixed point F at a forward end of the clamping arm 139. The fluid supply conduits 129' and 129" can be formed in any suitable manner, such as by additive manufacturing or by molding the clamping arm 139 around a removable matrix material (not shown) that can be withdrawn or otherwise removed following formation of the clamping arm. Outlet openings 135' and 135" can be disposed inside the clamping arm 139 at the second ends 133' and 133" of the fluid supply conduits 129' and 129". The outlet openings 135' and 135"generally face the fixed point F and the front side 151 of the toolholder body 123.

In the embodiment of the toolholder 223 shown in FIG. 3A, the clamping arm 239 (shown by itself in FIGS. 3B-3C) is secured to the toolholder body 223 by a pair of bolts 257 that extend through a pair of holes 259 in the clamping arm and mate with internally threaded holes (not shown) or other suitable structure in the toolholder body in a known manner. One or more fluid supply conduits 229 (one shown in FIGS. 3B and 3C) extend through the clamping arm 239 from a first end 231 that is connected to the pump P and the source S of fluid, either through another conduit (not shown) in the toolholder body 223 or through a conduit (not shown) outside of the toolholder body. The second end 233 of the fluid supply conduit 229 is disposed at a forward end of the clamping arm 239 and faces the fixed point F, which is typically at the cutting edge 225 of the cutting insert 227. The fluid supply conduit 229 can be formed by any suitable means, such as by drilling a first hole 253' from the forward end of the clamping arm 239 and drilling a second hole 253" from a bottom side of the clamping arm so that the two holes intersect at a point 255. The end of the first hole 253 at the forward end of the clamping arm 239 can form the second end 233 of the fluid supply conduit 229, and the end of the second hole 253" on the bottom side of the clamping arm can form the first end 231 of the fluid supply conduit. An outlet opening 235 can be disposed inside the clamping arm 239 at the second end 233 of the fluid supply conduit 229. The outlet opening 235 generally faces the fixed point F and the front side 251 of the toolholder body 223.

One or more second fluid supply conduits 229' can be provided in the toolholder body 223. For example, the fluid supply conduit 229' having a second end 233' at the front side 251 of the toolholder body 223 can be formed in a manner similar to the manner in which the second fluid supply conduit 29' discussed above with regard to FIGS. 1A-1C is formed. An outlet opening 235' can be disposed in the toolholder body 223 at the second end 233' of the second fluid supply conduit 229'. The outlet opening 235' generally faces the fixed point F and the top side 253 of the toolholder body 223.

In the embodiment of the toolholder 321 shown in FIGS. 4A-4C, the fluid supply conduit 329 extends to a second end 333 at the top side 349 of the toolholder body 323, the second end 333 being disposed behind the cutting insert seat 337 and facing the fixed point F which is typically at the cutting edge 325 of the cutting insert 327. The first end 321 of the fluid supply conduit 329 can be connected to the pump P and source of fluid S. As seen in FIG. 4C, an outlet opening 335 can be disposed in the toolholder body 323 at the second end 333 of the fluid supply conduit 329. The outlet opening 335 generally faces the fixed point F and the front side 351 of the toolholder body 323. Additional fluid supply conduits can be provided as in other illustrated embodiments.

With reference to the toolholder 221 of FIG. 3A and clamping arm 239 of FIGS. 3B-3C and toolholder 321 of FIG. 4A and clamping arm 339 of FIGS. 4B-4C, the fluid supply conduits 229, 229', and 329 can each include a removable nozzle 63 at their second end 233, 233', and 333. The outlet openings 235, 235', and 335 can be provided in the nozzle. The toolholders 21 and 121 of FIGS. 1A-1C and 2A-2D can also include removable nozzles at second ends of their fluid supply conduits, however, in the illustrated embodiments, the outlet openings 35, 35' and 135', 135" are provided with nozzles in the form of small openings in the toolholders themselves. As seen in FIGS. 3B-3C and 4C the second ends 233 and 333 of the fluid supply conduits 229 and 329 can be internally threaded for mating with external threads on the removable nozzle 63.

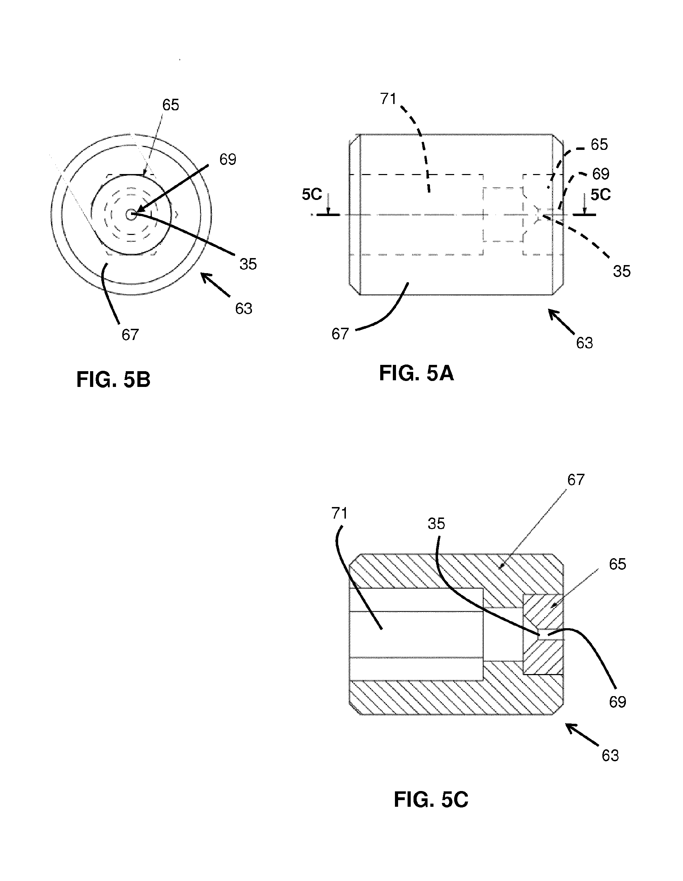

As seen with reference to FIGS. 5A-5C, the removable nozzle 63 can include a first portion 65 that includes the outlet opening 35 and is made of a first material that is particularly resistant to high pressures and low temperatures involved with use of scCO2 as a coolant, and a second portion 67 around the first portion and in which the first portion is secured and made of a second material that is less resistant but more easily machinable or moldable than the first portion. The inventors have determined that sapphire is particularly useful as the first material, and that stainless steel is useful as the second material. The second portion 67 can include an external thread that mates with an internal thread in the fluid supply conduit. A small diameter passage 69 can lead to the outlet opening 35 and a non-circular, larger diameter passage 71 can face outwardly from the toolholder (shown in FIGS. 3A, 4B and 4C) toward the fixed point to receive a wrench for screwing the nozzle 63 into the threads at the second end of the fluid supply conduit.

Alternatively, as seen in FIG. 6, a removable nozzle 163 can be monolithic and have an external thread for mating with an internal thread in the fluid supply conduit, and a small diameter opening 169 to facilitate maintaining pressure in the fluid supply conduit and precisely directing the flow of coolant. The nozzle 163 can also include a non-circular, larger diameter opening 171 leading to the small diameter opening to receive a wrench for screwing the nozzle 63 into the threads at the second end of the fluid supply conduit. The larger diameter opening 171 can face outwardly from the toolholder (shown in FIGS. 3A, 4B and 4C) toward the fixed point.

In the embodiments of the toolholder 21, 121, 221, and 321 shown in whole or in part in FIGS. 1A-1C, 2A-2D, 3A-3C, and 4A-4C, the fluid supply conduit can be at least partially inside the toolholder body 23, 123, 223, and 323. In other embodiments (not shown), the fluid supply conduit may be entirely external to the toolholder body and/or the clamp.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

While this invention has been illustrated and described in accordance with a preferred embodiment, it is recognized that variations and changes may be made therein without departing from the invention as set forth in the claims.

## Claims

1. A toolholder (21, 121, 221, 321), comprising:
a toolholder body (23, 123, 223, 323), the toolholder body (23, 123, 223, 323) being adapted to present a cutting edge (25, 125, 225, 325) at a fixed point (F);
a fluid supply conduit (29, 29'; 129', 129"; 229; 329) having a first end (31, 31'; 131', 131"; 231; 331) adapted to be connected to a source of fluid (S) and a second end (33, 33'; 133', 133"; 233; 333) having an outlet opening (35, 35'; 135', 135"; 235; 335) facing generally toward the fixed point (F),
**characterized in that** the outlet opening (35, 35'; 135', 135"; 235; 335) is between 0.1 mm and less than 0.5 mm in diameter, more preferably between 0.1 mm and 0.2 mm, and still more preferably between 0.15 mm and 0.2 mm.

2. The toolholder (21, 121, 221, 321) as set forth in claim 1, wherein the toolholder (21, 121, 221, 321) includes a cutting insert seat for receiving a cutting insert, the cutting insert comprising the cutting edge (25, 125, 225, 325) and being mountable in the cutting insert seat to permit the toolholder (21, 121, 221, 321) to present the cutting edge (25, 125, 225, 325) at the fixed point (F).

3. The toolholder (21, 121, 221) as set forth in claim 2, wherein the toolholder (21, 121, 221) comprises a clamp (39, 139, 239) for mounting the cutting insert to the toolholder body (23, 123, 223), the fluid supply conduit (29, 29'; 129', 129"; 229) being at least partially inside the clamp (39, 139, 239).

4. The toolholder (21, 121, 221) as set forth in claim 3, wherein the outlet opening (35, 35'; 135', 135"; 235) is inside the clamp.

5. The toolholder (221, 321) as set forth in any of claims 1-4, wherein the fluid supply conduit (229; 329) includes a nozzle (63, 163) at the second end (233; 333), the outlet opening (235; 335) being provided in the nozzle (63. 163).

6. The toolholder (221, 321) as set forth in claim 5, wherein the nozzle (63) includes a first portion (65) including the outlet opening (235; 335), the first portion (65) being made of sapphire, and a second portion (67) around the first portion (65), the second portion (67) not being made of sapphire.

7. The toolholder (221, 321) as set forth in claim 6, wherein the second portion (67) includes an external thread that mates with an internal thread in the fluid supply conduit (229; 329).

8. The toolholder (21, 121, 221, 321) as set forth in any of claims 1-7, wherein the fluid supply conduit (29, 29'; 129', 129"; 229; 329) is at least partially inside the toolholder body (23, 123, 223, 323).

9. The toolholder (21, 121, 221) as set forth in any of claims 1-8, wherein the fluid supply conduit (29, 29'; 129', 129"; 229) includes a plurality of conduit portions, each conduit portion including a respective second end (33, 33'; 133', 133"; 233) and outlet opening (35, 35'; 135', 135"; 235).

10. The toolholder (21, 121, 221) as set forth in claim 9, wherein the toolholder body (23, 123, 223) has a front side and a top side, wherein a first outlet opening (35; 135', 135"; 235) of a first conduit portion of the plurality of conduit portions generally faces the fixed point (F) and the front side (51, 151, 251).

11. The toolholder (21, 221) as set forth in claim 10, wherein a second outlet opening (35'; 235) of a second conduit portion of the plurality of conduit portions generally faces the fixed point (F) and the top side (49, 249).

12. The toolholder (21, 221) as set forth in claim 11, wherein the second outlet opening (35'; 235) is in the front side (51, 251) of the toolholder body (23, 223).

13. The toolholder (21, 121, 221) as set forth in any of claims 10-12, wherein the first outlet opening (35; 135', 135"; 235) is in the top side (49, 149, 249) of the toolholder body (23, 123, 223).

14. The toolholder (21, 121, 221) as set forth in any of claims 10-13, wherein the toolholder comprises a clamp (39, 139, 239), and in that the at least one outlet opening (35; 135', 135"; 235) is in the clamp.

15. The toolholder (21, 121, 221, 321) as set forth in any of claims 1-14, wherein the toolholder (21, 121, 221, 321) is part of a turning tool having fluid supply conduits particularly adapted for use with supercritical CO₂ (sCO2).
